# EUROPÄISCHE PATENTSCHRIFT

(11) **EP 0 762 712 B1**
(45) Veröffentlichungstag und Bekanntmachung des Hinweises auf die Patenterteilung: **26.03.2003**
(21) Anmeldenummer: 96112785.9
(22) Anmeldetag: 07.08.1996
(51) Int. Cl.: H04M 3/22, H04Q 3/00

(54) **Verfahren zum Aktivieren von Kommunikationsendgeräten bei netzwerkmanagementspezifischen Ereignissen**
Method for activated communication terminals after network management specific events
Méthode pour activer des terminaux de communication à l'occasion d'événements spécifiques de gestion de réseau

(30) Priorität: 10.08.1995 DE 19529495
(43) Veröffentlichungstag der Anmeldung: 12.03.1997
(73) Patentinhaber: SIEMENS AKTIENGESELLSCHAFT, 80333 München (DE)
(72) Erfinder: Geck, Betram, Dipl.-Ing., 58239 Schwerte (DE)

(56) Entgegenhaltungen:
- GB-A- 2 270 607

## Beschreibung

In aktuell konzipierten Kommunikationsnetzen und Netzwerken-lokal, privat oder öffentlich - sind Netzwerkmanagement-Routinen vorgesehen, mit deren Hilfe automatisch eine Kommunikationsnetz-Topologie - z.B. eines Personal Computer Netzwerkes - erkannt und gespeichert werden kann. Des weiteren sind zu jeder erkannten Kommunikationsnetz-Komponente - z.B. Netzwerkserver oder Kommunikationszentrale - deren Standort sowie deren Kommunikationsnetz-Topologieort angebende Informationen gespeichert.

Tritt nun in dem Kommunikationsnetz ein vorgegebenes Ereignis auf, z.B. eine Fehler- oder Störungsmeldung einer Kommunikationsnetz-Komponente, so wird das Ereignis einer Managementzentrale gemeldet und an einem mit einer Bedienperson versehenen, zentralen Managementplatz durch die Bedienperson das aufgetretene Ereignis erfaßt - beispielsweise durch die visualisierte Darstellung des Ereignisses -, der Ansprechpartner bzw. der Name des Verantwortlichen ermittelt und eine Aktivierung des Verantwortlichen bzw. Ansprechpartners veranlaßt. Hierbei wird die Rufnummerninformation des Verantwortlichen durch die Bedienperson ermittelt und die ermittelte Rufnummerninformation in eine Telefon-Hilfseinrichtung eingetippt, mit deren Hilfe eine Verbindung zum Kommunikationsendgerät des Verantwortlichen bzw. Ansprechpartners hergestellt wird.

Die der Erfindung zugrundeliegende Aufgabe besteht darin, die Aktivierung des Ansprechpartners bzw. Verantwortlichen zu vereinfachen. Die Aufgabe wird ausgehend von einem Verfahren gemäß den Merkmalen des Oberbegriffs des Patentanspruchs 1 durch dessen kennzeichnende Merkmale gelöst.

Der wesentliche Aspekt des erfindungsgemäßen Verfahrens ist darin zu sehen, daß in der Netzwerkmanagementzentrale für jedes vorgegebenes Ereignis eine das zu aktivierende Kommunikationsendgerät bestimmende Rufnummerninformation zugeordnet ist. Nach dem Melden eines vorgegebenen Ereignisses wird durch die zugeordnete Netzwerkmanagementroutine die zugeordnete Rufnummer ermittelt und mit Hilfe der Wähleinrichtung eine Verbindung gemäß der ermittelten Rufnummerninformation über das Kommunikationsnetz aufgebaut. Der wesentliche Vorteil des erfindungsgemäßen Verfahrens ist darin zu sehen, daß die Bedienperson von umfangreichen Ermittlungstätigkeiten entlastet, d.h. mit minimalstem zeitlichen Aufwand eine Verbindung zum Kommunikationsendgerät des Ansprechpartners bzw. Verantwortlichen aufgebaut wird.

Gemäß einer vorteilhaften Ausgestaltung des erfindungsgemäßen Verfahren wird mit Hilfe der Zuordnungsroutine (ZOR) und der Wähleinrichtung die Verbindung automatisch zu dem durch die ermittelte Rufnummerninformation bestimmten Kommunikationsendgerät aufgebaut. Bei dieser Variante kann auf die Bedienperson verzichtet werden, wobei zur Sicherstellung der Aktivierung des jeweiligen Ansprechpartners der Verbindungsaufbau zu einem Speicher, d.h. "Mailbox" des jeweiligen Kommunikationsendgerätes aufgebaut und eine Hinweisinformation - beispielsweise die Ereignisinformation - eingetragen wird - Anspruch 3. Hierdurch wird eine zwar nachträgliche, jedoch sobald als mögliche Aktivierung des betroffenen Ansprechpartners bzw. Verantwortlichen erreicht.

Die vorgegebenen Ereignisse stellen insbesondere Fehler- und Störungsmeldungen der einzelnen Kommunikationsnetz-Komponenten dar - Anspruch 5. Bei diesen Ereignissen in einem Kommunikationsnetz ist die umgehende Aktivierung des Kommunikationsendgerätes des Ansprechpartners bzw. Verantwortlichen besonders vorteilhaft.

Im folgenden wird das erfindungsgemäße Verfahren anhand eines Blockschaltbildes näher erläutert. Das Blockschaltbild zeigt ein Netzwerkmanagementsystem NMS, das Netzwerkmanagementroutinen NMR umfaßt. Durch diese Netzwerkmanagementroutinen NMR werden Ereignisse e erfaßt und durch die Übermittlung einer Ereignismeldung em an eine Netzwerkmanagementplattform bzw. eine Netzwerkmanagementzentrale NMZ gemeldet. Die Übermittlung erfolgt in Abhängigkeit von dem vorliegenden Kommunikationsnetz bzw. Netzwerk, das durch das Netzwerkmanagementsystem NMS gesteuert wird. In der Netzwerkmanagementzentrale NMZ ist für jedes in dem jeweiligen Netzwerk auftretenden Ereignis e bzw. jede übermittelte Ereignismeldung em eine Telefonrufnummer rnx desjenigen Fernsprechteilnehmers FTLNX gespeichert, der für das Kommunikationsnetzelement, in dem das Ereignis e aufgetreten ist bzw. die Ereignismeldung em gebildet wurde, den zuständigen Ansprechpartner bzw. Verantwortlichen repräsentiert.

Trifft eine Ereignismeldung em in der Netzwerkmanagementzentrale NMZ ein, wird die zugeordnete Rufnummer rnx ermittelt und an einem beispielsweise Personalcomputer visualisiert. Nach einer einfachen Initialisierung an der Bedieneroberfläche des Personalcomputer - z.B. durch einen Cursorsteuerung - wird die Rufnummer rnx automatisch gewählt und ein Verbindungsaufbau zu dem durch die Rufnummer rnx bestimmten Fernsprechendgerät KEX eingeleitet. Hierzu ist in der Netzwerkmanagementzentrale NMZ eine automatische Wähleinrichtung TAPI für ein Fernsprechnetz FE, an das weitere Fernsprechendgeräte KE - jeweils einem Teilnehmer FTLN - angeschlossen sind, realisiert. Die automatisch ausgewählte Rufnummer rnx wird im Sinne eines Verbindungsaufbaus an die automatische Wähleinrichtung übergeben. Die Verbindung kann alternativ über öffentliche oder private Fernsprechnetze - nicht dargestellt - aufgebaut werden. Die Initialisierung des Verbindungsaufbaus in der Netzwerkmanagementzentrale NMZ kann alternativ automatisch nach einer Übermittlung einer Ereignismeldung em oder, wie vorhergehend erläutert, durch einen Anreiz an der Bedieneroberfläche der Netzwerkmanagementzentrale NMZ, z.B. durch einen Tastendruck oder durch eine Cursorsteuerung - durch eine Bedienperson erfolgen. Bei einer Nichterreichbarkeit des durch die Rufnummerninformation rni bestimmten Fernsprechendgerätes KEX wird mit Hilfe der automatischen Wähleinrichtung TAPI die Ereignismeldung em in einen eine "Mailbox"-Funktion realisierenden Speicher SP des bestimmten Fernsprechendgerätes KEX übertragen, dort gespeichert und die Speicherung akustisch und/oder optisch angezeigt.

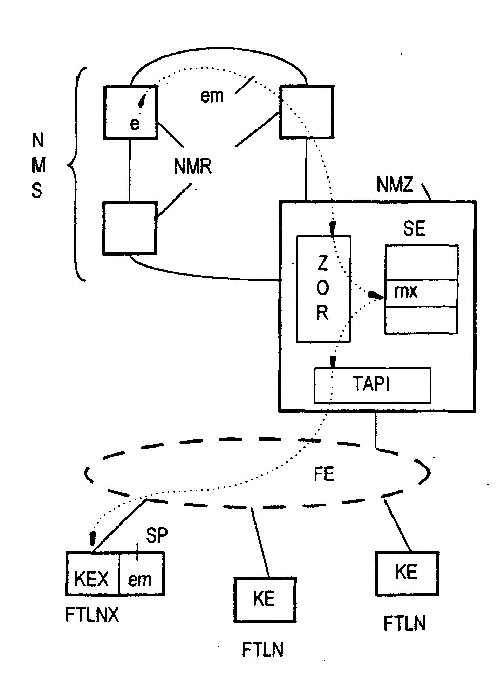

## Patentansprüche

1. Verfahren zum Aktivieren von Kommunikationsendgeräten (KEX) in einem Kommunikationsnetz (FE),
bei dem vorgegebene, netzwerkmanagementspezifische Ereignisse (e) eines Netzwerkmanagementsystems (NMS) einer der zugeordneten Netzwerkmanagementroutinen (NMR) gemeldet werden,
- bei dem die Ereignisse (e) durch Ereignismeldungen (EM) einer Netzwerkmanagementzentrale (NMZ) gemeldet werden und in Abhängigkeit von dem gemeldeten Ereignis (E) das zugeordnete Kommunikationsendgerät (KEX) über das Kommunikationsnetz (FE) aktiviert wird,
**dadurch gekennzeichnet,**
**daß** in der zugeordneten Netzwerkmanagementzentrale (NMZ) mit Hilfe einer Zuordnungsroutine (ZOR) für jedes vorgegebene Ereignis (e) eine das zu aktivierende Kommunikationsendgerät (KEX) bestimmende Rufnummerninformation (rnx) zugeordnet und nach dem Melden eines vorgegebenen Ereignisses (e) die zugeordnete Rufnummerninformation (rnx) ermittelt wird, und
**daß** mit Hilfe einer Wähleinrichtung (TAPI) eine Verbindung zu einem durch die ermittelte Rufnummerninformation (rnx) bestimmten Kommunikationsendgerät (KEX) über das Kommunikationsnetz (FE) aufgebaut wird.

2. Verfahren nach Anspruch 1,
**dadurch gekennzeichnet,**
**daß** mit Hilfe der Zuordnungsroutine (ZOR) und der Wähleinrichtung (TAPI) die Verbindung automatisch zu dem durch die ermittelte Rufnummerninformation (rni) bestimmten Kommunikationsendgerät (KEX) aufgebaut wird.

3. Verfahren nach Anspruch 2,
**dadurch gekennzeichnet,**
**daß** zu dem durch die angegebenen Rufnummerninformation (rni) bestimmten Kommunikationsendgerät (KEX) eine Verbindung aufgebaut wird und die Ereignismeldung (em) in einen dem Kommunikationsendgerät (KEX) zugeordneten Speicher (SP) übertragen wird.

4. Verfahren nach einem der Ansprüche 1 bis 3,
**dadurch gekennzeichnet,**
**daß** mit Hilfe der Zuordnungsroutine (ZOR) und der Wähleinrichtung (TAPI) die Ereignisinformation (ei) sowie die ermittelte Rufnummerninformation (rnx) visualisiert und nach einer bedieneroberflächengesteuerten Initialisierung automatisch die Verbindung zu dem durch die ermittelte Rufnummerninformation (rni) bestimmten Kommunikationsendgerät (KEX) aufgebaut wird.

5. Verfahren nach einem der Ansprüche 1 bis 4,
**dadurch gekennzeichnet,**
**daß** die vorgegebenen Ereignisse (e) den Ausfall oder die Störung von Kommunikationsnetzkomponenten anzeigende Fehler- bzw. Störungsinformationen repräsentieren.

6. Verfahren nach einem der Ansprüche 1 bis 5,
**dadurch gekennzeichnet,**
**daß** durch die Rufnummerninformation (rnx) dasjenige Kommunikationsendgerät (KEX) bestimmt ist, dessen Teilnehmer (FTLNX) als Ansprechpartner bzw. Verantwortlicher für die jeweilige Netzwerkkomponente vorgesehen ist.

## Revendications

1. Procédé destiné à activer des terminaux de communication (KEX) dans un réseau de communication (FE),
- dans lequel des événements (e) donnés, spécifiques à la gestion du réseau, d'un système (NMS) de gestion du réseau, sont signalés à une des routines (NMR) correspondante de gestion du réseau,
- dans lequel les événements (e) sont signalés, grâce à des messages d'événements (EM), à une centrale (NMZ) de gestion du réseau et le terminal (KEX) de communication correspondant est sollicité, en fonction de l'événement (E) signalé, à travers le réseau de communication (FE)
**caractérisé par le fait**
**que**, dans la centrale (NMZ) de gestion du réseau correspondante, une information (rnx), relative à un numéro d'appel et définissant le terminal (KEX) de communication à activer, est affectée à chaque événement (e) donné et qu'après le signalement d'un événement (e) donné, l'information (mx) respective, relative à un numéro d'appel, est déterminée et
**que**, à l'aide d'un dispositif (TAPI) de sélection, une communication est établie, à travers le réseau de communication (FE), vers un terminal (KEX) de communication défini par l'information (mx) déterminée, relative à un numéro d'appel.

2. Procédé selon la revendication 1
**caractérisé par le fait**
**que**, à l'aide de la routine d'affectation (ZOR) et du dispositif de sélection (TAPI), la communication est établie automatiquement vers le terminal de communication (KEX) défini par l'information (rnx) déterminée, relative à un numéro d'appel.

3. Procédé selon la revendication 2
**caractérisé par le fait**
**qu'**une communication est établie vers le terminal de communication (KEX) défini par l'information (rni) indiquée, relative à un numéro d'appel, et que le message d'événement (em) est transmis à une mémoire (SP) affectée au terminal de communication (KEX).

4. Procédé selon l'une des revendications 1 à 3
**caractérisé par le fait**
**que**, à l'aide de la routine d'affectation (ZOR) et du dispositif de sélection (TAPI), l'information d'événement (ei), ainsi que l'information (mx) déterminée, relative à un numéro d'appel, sont visualisées et, après une initialisation contrôlée par interface de commande, la communication est établie automatiquement vers le terminal de communication (KEX) défini par l'information (rnx) déterminée, relative à un numéro d'appel.

5. Procédé selon l'une des revendications 1 à 4
**caractérisé par le fait**
**que** les événements donnés (e) représentent des informations d'erreurs ou de dérangements indiquant la défaillance ou le dérangement de constituants du réseau de communication.

6. Procédé selon l'une des revendications 1 à 5
**caractérisé par le fait**
**que**, grâce à l'information (mx), relative à un numéro d'appel, est déterminé le terminal de communication (KEX) dont l'abonné (FTLNX) est prévu en tant que personne concernée et/ou responsable pour le constituant respectif du réseau.

## Claims

1. Method for activating communication terminals (KEX) in a communication network (FE),
in which prescribed, network-management-specific events (e) in a network management system (NMS) are reported to one of the associated network management routines
(NMR),
- in which the events (e) are reported to a network management centre (NMZ) by means of event messages (EM), and the reported event (E) is taken as a basis for activating the associated communication terminal (KEX) via the communication network (FE),
**characterized**
**in that** an allocation routine (ZOR) is used in the associated network management centre (NMZ) to allocate, for each prescribed event (e), a call number information item (rnx) determining the communication terminal (KEX) which is to be activated, and the allocated call number information item (rnx) is ascertained after a prescribed event (e) has been reported, and
**in that** a dialling device (TAPI) is used to set up a connection to a communication terminal (KEX) determined by the ascertained call number information item (rnx) via the communication network (FE).

2. Method according to Claim 1,
**characterized**
**in that** the allocation routine (ZOR) and the dialling device (TAPI) are used to set up the connection automatically to the communication terminal (KEX) determined by the ascertained call number information item (rni).

3. Method according to Claim 2,
**characterized**
**in that** a connection is set up to the communication terminal (KEX) determined by the specified call number information item (rni), and the event message (em) is transferred to a memory (SP) associated with the communication terminal (KEX).

4. Method according to one of Claims 1 to 3,
**characterized**
**in that** the allocation routine (ZOR) and the dialling device (TAPI) are used to visualize the event information item (ei) and the ascertained call number information item (rnx), and the connection to the communication terminal (KEX) determined by the ascertained call number information item (rni) is set up automatically following initialization controlled by a user interface.

5. Method according to one of Claims 1 to 4,
**characterized**
**in that** the prescribed events (e) represent fault or interference information indicating failure of or interference in communication network components.

6. Method according to one of Claims 1 to 5,
**characterized**
**in that** the call number information item (rnx) determines that communication terminal (KEX) whose subscriber (FTLNX) is intended to be a contact or person responsible for the respective network component.
